# EUROPEAN PATENT APPLICATION

(11) **EP 2 550 931 A1**
(43) Date of publication of application: **30.01.2013**
(21) Application number: 11175794.4
(22) Date of filing: 28.07.2011
(51) Int. Cl.: A61C 15/04

(54) **Holder for dental floss**

(71) Applicant: The Procter & Gamble Company, Cincinnati, OH 45202 (US)
(72) Inventor: Herzog, Karl, 60489 Frankfurt (DE)
(74) Representative: Joos, Uta Susanne

(57) **Abstract**

A dental floss clamp, said clamp comprising a first limb and a second limb which are mutually hinged at a first end of each limb; each limb having a plurality of projections and recesses configured such that when the limbs are brought together the projections of the first limb can engage with the recesses of the second limb and the projections of the first limb press laterally on the projections of the second limb in order to clamp a length of dental floss.

## Description

### FIELD OF THE INVENTION

The invention relates to a handling aid for dental floss and particularly to a clamp for dental floss.

### BACKGROUND OF THE INVENTION

Dental floss is a well-known article used to promote oral hygiene by aiding in the removal of particles lodged in the interproxminal areas of the teeth. In interdental spaces, the tooth surfaces are best freed from plaque by means of dental floss. The surface of conventional dental floss is generally smooth and is sometimes waxed. This makes it difficult for an individual to hold the floss during use because it can not be tightly grasped and slips between the user's fingers. The handling of conventional dental floss is thus difficult.

Often floss is purchased and packaged in a container/dispenser having an internal chamber for securely holding a large continuous length of floss wrapped around a spool or bobbin. A length of floss can be drawn and separated from the spooled portion remaining within the container. The floss emerges through a slit on the top of the container and can be separated from the bobbin by a cutting device. For a typical example see USD0339426. To floss the teeth, a person usually wraps the ends of the floss round the forefinger of each hand to be able to impose tension on a short length of the floss to thereby squeeze it between teeth and manipulate it to remove plaque. This can become painful if the floss is wrapped too tightly, or when the floss becomes taut during use. The resulting constriction of the fingers is unpleasant, and the fingers may remain constricted during the cleaning of a complete set of teeth. Furthermore, lack of control of the floss can lead to cutting of the gums. The chances of this happening increase when the floss is moistened by saliva as the friction between a user's fingers and the floss decreases if the surfaces are moistened. The dental floss can then slip.

Accordingly, an object of the invention is the provision of a device that eliminates the need to wrap the floss round the fingers and which allows the user to effectively control the tension of the floss. It is known in the art that it is desirable for floss to form a closed loop so that tension may be applied on or at a selected portion of the loop that is inserted between the teeth. When utilising a dental floss loop, the fingers need only be constricted during the cleaning of one interdental space. When switching to the next interdental space, the constriction is interrupted as the user moves the floss. Additionally, as this brings into engagement, with the interdental spaces, a different region of the dental floss loop, excessive local use of the floss is avoided. In US4550741, flexible strands are closed by a joining means, and in US5947132 a plurality of flossing loops are connected to form a cascade of loops, provided in a dispenser. US5799673 discloses dental floss with finger loops. A plurality of lengths of floss is provided, each having a finger loop at each end. The lengths of floss are removably connected to each other to form a single continuous piece and are stored within a dispenser. However, there remains a need to find a more efficient way of forming a dental floss loop.

It is the goal of the invention to facilitate the handling of the dental floss by providing a dental floss clamp. The clamp allows the formation of a dental floss loop from a continuous strand of floss and provides several points of contact with the floss which increase friction forces on the floss and thus reduce the risk of the floss slipping when held in the clamp. Consequently, tension can be maintained in the floss throughout use and the need to wind the floss around the user's fingers is removed.

### SUMMARY OF THE INVENTION

The present invention provides a dental floss clamp, said clamp comprising a first limb and a second limb which are mutually hinged at a first end of each limb; each limb having a plurality of projections and recesses configured such that when the limbs are brought together the projections of the first limb can engage with the recesses of the second limb and the projections of the first limb press laterally on the projections of the second limb in order to clamp a length of dental floss. The invention further provides for use of a dental floss clamp wherein a length of dental floss is placed in the clamp and a dental floss loop is created and a kit comprising at least one dental floss clamp and a length of dental floss.

### BRIEF DESCRIPTION OF THE DRAWINGS

Figure 1 shows a cross section in plane C - C of the dental floss clamp shown in Figure 2
Figure 2 shows a longitudinal section in plane B - B of the dental floss clamp shown in Figure 1
Figure 3 shows a longitudinal section in plane A - A of the dental floss clamp shown in Figure 1
Figures 4 to 6 show alternative uses of the dental floss clamp of Figures Ito 3
Figure 7 shows a longitudinal section in plane A - A of a dental floss clamp provided in a dental floss dispenser in plane A-A
Figure 8 shows a cross section in plane B-B of the dental floss dispenser of Figure 7

### DETAILED DESCRIPTION OF THE INVENTION

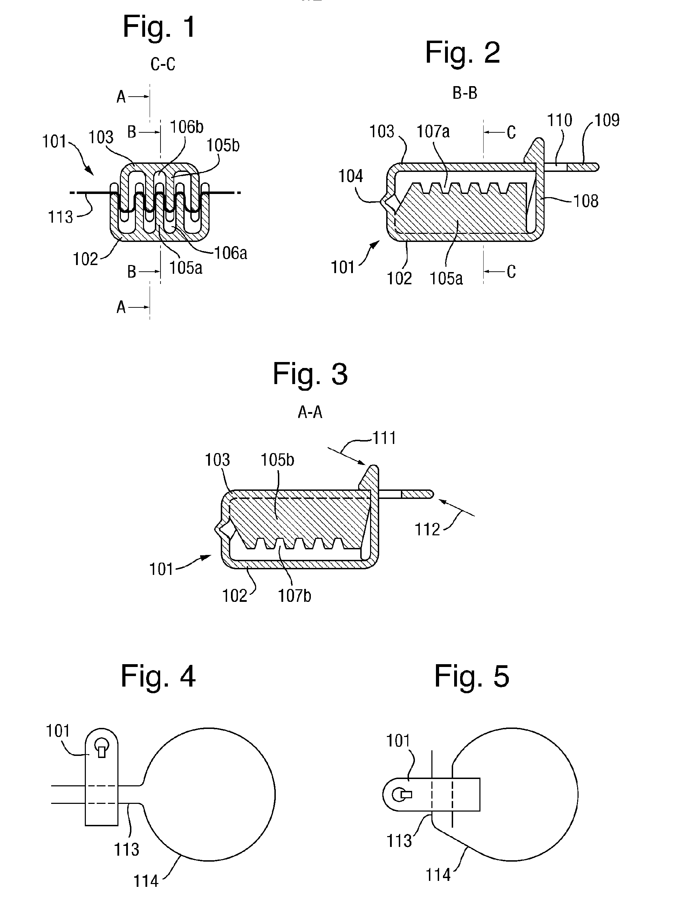

Referring first to Figures 1 to 3, a dental floss clamp 101 comprises a first limb 102 and a second limb 103 which are mutually hinged at a first end of each limb. The clamp may be made from a thermoplastic plastic material by means of injection molding. The plastic material for the clamp may be selected from polyethylene, polyethylene terephthalate, polyamide, polypropylene, polyoxymethylene and mixtures thereof. Preferably the plastic material is selected from polyamide, polyoxymethylene and mixtures thereof. The hinge 104 preferably consists of a thin layer of the same thermoplastic material as the two limbs. This has the advantage that the clamp 101 can be produced in a single injection molding step.

As used herein, a and b refer to the same feature on each of the two limbs of the clamp. Each limb 102, 103 comprises a plurality of projections 105a, 105b and recesses 106a, 106b configured such that when the limbs are brought together the projections 105a of the first limb can engage with the recesses 106b of the second limb. When the limbs are brought together, the projections 105a of the first limb press laterally on the projections 105b of the second limb in order to clamp a length of dental floss.

The projections may comprise at least one indentation 107a, 107b in which dental floss can be placed. The indentations provide additional points of contact for the floss and the clamp increasing the friction forces present on the clamp, thus enabling the floss to be gripped in the clamp more securely.

Preferably the clamp comprises a locking portion 108 at the free end of the first limb 102 and a shoulder 109 comprising a hole 110, at the free end of the second limb 103. When the limbs are brought together, the locking portion penetrates the hole and the clamp is secured in the closed position. If the user exerts opposing forces 111, 112 on the locking portion and the shoulder, the locking portion is released from the hole and the dental floss clamp opens.

Referring to Figures 4 to 6, the user can place two free ends of a length of dental floss into the indentations of the open dental floss clamp in such a manner that a dental floss loop 114 is created. When the dental floss clamp is in the closed position, the free ends of the dental floss are clamped by the co-operating projections. The indentations provide additional points of contact for the floss with the clamp. The friction forces present on the floss are therefore increased, enabling the floss to be gripped in the clamp more securely. If the dental floss loop is pulled by the user, friction acts where the length of dental floss is in contact with the clamp and improves the handling of the floss by increasing the tension and reducing the risk of the floss slipping.

The user can tighten the dental floss loop 114 between two fingers 115 and can thus remove the plaque in the interdental space. The handling is considerably simpler than without the dental floss clamp because the user need not wrap the floss around their fingers to provide friction during use of the floss. Thus the problems of wrapping floss around the fingers, discussed in the background of the invention, are overcome. After cleaning of the teeth, the user can exert opposing forces on the locking portion and shoulder to open the clamp and the dental floss can be removed.

Alternatively the user need not form a dental floss loop. Instead, the user can place two dental floss clamps on a continuous length of dental floss. The dental floss clamps 101 can be positioned adjacent to the ends of the length of floss. When the floss clamps are in the closed position, the floss will be held in place by the frictional forces imposed by the projections 105a, 105b. This will facilitate the handling of the floss by maintaining tension, and it will remove the need to wind the dental floss around the fingers.

The dental floss may be packaged in a container having an internal chamber for securely holding a large continuous length of floss wrapped around a spool or bobbin. The dental floss clamp may be provided in the lid of the container from where it can be removed or alternatively the dental floss clamp may be provided separately from the container. Furthermore, and as described below, the dental floss clamp may be provided integral to the container.

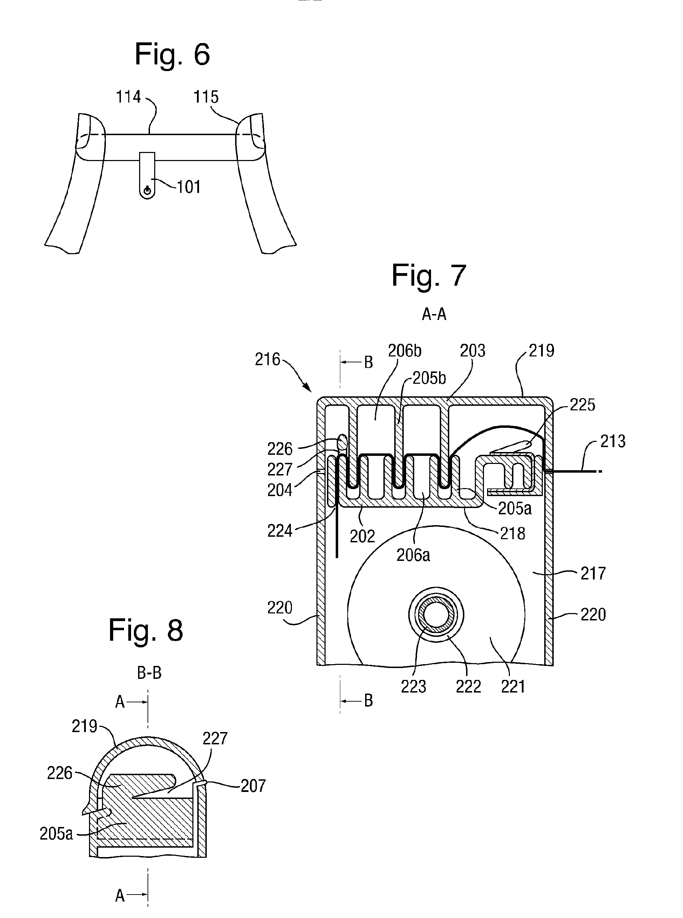

In one embodiment, referring to Figure 7, a dental floss case 216 comprises a rear wall 217, a non-illustrated front wall, an end wall 218, a lid 219, two side walls 220 and a non-illustrated base. These elements are preferably made of the same thermoplastic plastic materials as discussed above. The rear wall 217 is preferably connected with the lid 219 by means of a hinge 204.

In the dental floss case 216, a dental floss coil 221 comprising a core 222 may be positioned in a rotatable manner on a lug 223, which may be part of the front wall. A length of dental floss 213 can be pulled from the dental floss case 216 through a slit 224 in the end wall 218.

In the embodiment illustrated in Figure 7, the end wall 218 forms the first limb 202 of a dental floss clamp. A plurality of projections 205a extend from the end wall 218. The lid 219 forms the second limb 203 of the dental floss clamp. A plurality of projections 205b extend from the lid 219. Thus, each limb 202, 203 comprises a plurality of projections 205a, 205b and recesses 206a, 206b. When the lid is closed, the projections 205a on the first limb can engage with the recesses 106b of the second limb. When the lid is closed and the limbs are brought together, the projections 205a of the first limb press laterally on the projections 205b of the second limb in order to clamp a length of dental floss.

The projections may comprise at least one indentation in which dental floss can be placed. The indentations provide additional points of contact for the floss and the clamp increasing the friction forces present on the clamp, thus enabling the floss to be gripped in the clamp more securely.

Preferably a cutting device 225 is fastened in the end wall 218, preferably at a location adjacent to where the length of floss exits the dental floss clamp.

When the lid 219 is open, the user can pull a length of dental floss 213, preferably having a length of from 200 to 400 mm, through the slit 224. In the proximity of the slit 224, the end wall 218 may comprise a projection 205a which further comprises a protrusion 226, besides which a conical gap 227 is located as illustrated in Figure 8. The protrusion 226 and conical gap 227 function to hold the floss in place once it is pulled through the slit 224. The length of dental floss 213 is then in the correct position to be held in place by the clamp and additional floss is prevented from being pulled from the container.

The user can place the free end of the length of dental floss adjacent to the slit 224. In this manner a dental floss loop can be created. An adhesive surface may be provided adjacent to the slit 224 such that the user can attach the free end of the length of dental floss 213 to said adhesive surface. When the lid 19 is in the closed position, the two strands of the dental floss are clamped by the co-operating projections 205a, 205b. Preferably, the indentations provide additional points of contact for the floss and the clamp increasing the friction forces present on the clamp, thus enabling the floss to be gripped in the clamp more securely. If the dental floss loop is pulled by the user, friction acts where the length of dental floss 213 is in contact with the clamp and improves the handling of the floss by increasing the tension and reducing the risk of the floss slipping.

After cleaning of the teeth, the user can open the lid 219 and cut the dental floss 213 with the cutting device 225.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### DESCRIPTION OF REFERENCE NUMERALS

- 101: Dental floss clamp
- 102: First limb
- 103: Second limb
- 104: Hinge
- 105a, 105b: Projections
- 106a, 106b: Recesses
- 107a, 107b: Indentation
- 108: Locking portion
- 109: Shoulder
- 110: Hole
- 111, 112: Opposing forces
- 113: Length of dental floss
- 114: Dental floss loop
- 115: Fingers
- 202: First limb
- 203: Second limb
- 204: Hinge
- 205a, 205b: Projections
- 206a, 206b: Recesses
- 213: Length of dental floss
- 216: Dental floss case
- 217: Rear wall
- 218: End wall
- 219: Lid
- 220: Side wall
- 221: Dental floss coil
- 222: Core
- 223: Lug
- 224: Slit
- 225: Cutting device
- 226: Protrusion
- 227: Conical gap

## Claims

1. A dental floss clamp (101), said clamp comprising a first limb (102, 202) and a second limb (103, 203) which are mutually hinged at a first end of each limb; each limb having a plurality of projections (105a, 105b, 205a, 205b) and recesses (106a, 106b, 206a, 206b) configured such that when the limbs are brought together the projections (105a, 205a) of the first limb can engage with the recesses (106b, 206b) of the second limb and the projections (105a, 105a) of the first limb press laterally on the projections (105b, 205b) of the second limb in order to clamp a length of dental floss.

2. A dental floss clamp according to Claim 1 wherein at least one projection comprises an indentation (107a, 107b) in which to place the dental floss.

3. A dental floss clamp according to any preceding claim wherein the clamp comprises a locking portion (108) at a second end of the first limb (102) and a shoulder (109) comprising a hole (110), at a second end of the second limb (103) such that when the limbs are brought together, the locking portion (108) can penetrate the hole (110).

4. A dental floss clamp according to any preceding claim wherein the clamp is made of thermoplastic material.

5. A dental floss clamp according to Claim 5 wherein the clamp is produced in a single injection molding step.

6. A dental floss clamp according to Claims 1 or 2 wherein the clamp is integral with a dental floss container.

7. Use of a dental floss clamp according to any preceding claim for securing a piece of dental floss.

8. Use according to Claim 7 wherein a dental floss loop is created.

9. A kit comprising:
a. a dental floss clamp according to any one of Claims 1-6
b. a length of dental floss.
